# EUROPÄISCHE PATENTSCHRIFT

(11) **EP 0 677 563 B1**
(45) Veröffentlichungstag und Bekanntmachung des Hinweises auf die Patenterteilung: **12.07.2000**
(21) Anmeldenummer: 95105200.0
(22) Anmeldetag: 06.04.1995
(51) Int. Cl.: C09K 5/06, C09K 5/04

(54) **Verfahren zum Betreiben einer Kälteanlage**
Operation of a refrigeration system
Procédé d'opération d'un système de réfrigération

(30) Priorität: 14.04.1994 DE 4412954
(43) Veröffentlichungstag der Anmeldung: 18.10.1995
(73) Patentinhaber: Linde Aktiengesellschaft, 65189 Wiesbaden (DE)
(72) Erfinder: Mall, Klaus, Chem. Ing., D-50389 Wesseling (DE)
(74) Vertreter: Kasseckert, Rainer

(56) Entgegenhaltungen:
- EP-A- 0 352 120
- EP-A- 0 396 972
- WO-A-93/09198
- DE-A- 4 034 217
- US-A- 5 104 562
- Wörterbuch der Industriellen Technik, 5. Auflage, Oscar Brandstetter Verlag, Wiesbaden, 1989, Seite 521

## Beschreibung

Die Erfindung betrifft ein Verfahren zum Betreiben einer Kälteanlage.

Fluorchlorkohlenwasserstoffe (FCKW) galten aufgrund ihrer vorteilhaften physikalischen und physiologischen Eigenschaften seit mehreren Jahrzehnten als unentbehrliche Stoffe für die verschiedensten technischen Anwendungen, wobei sie in der Kältetechnik bevorzugt als Kältemittel für gewerbliche und industrielle Kälteanlagen eingesetzt wurden. Aufgrund der mit ihnen verbundenen Problematik im Hinblick auf die Ozonschicht sowie den Treibhauseffekt, wird seit einigen Jahren verstärkt nach Ersatzstoffen, die ansonsten die gleichen Vorteile aufweisen, gesucht. Bei industriellen Kälteanlagen hat sich Ammoniak, ein Stoff der weder ein ozonschädigendes Potential noch ein Treibhauspotential aufweist, seit langem bewährt. Wegen seiner umweltfreundlichen Eigenschaften wird Ammoniak neuerdings auch in Gewerbekälteanlagen verwendet. Zwischenzeitlich wird auch der Einsatz von Kohlenwasserstoffen, wie z. B. Propan oder Isobutan bzw. daraus hergestellte Mischungen, als Kältemittel diskutiert. Aufgrund der Giftigkeit von Ammoniak bzw. Brennbarkeit der Kohlenwasserstoffe ist für die Kälteversorgung in den Verkaufsräumen von Supermärkten die Zwischenschaltung eines Kälteträgers bzw. Kälteträgerkreislaufes erforderlich.

An die innerhalb der Kälteanlagen eingesetzten Kälteträger werden die unterschiedlichsten Anforderungen gestellt. So muß z. B. ein Kälteträger, der in einem Lebensmittelmarkt zum Einsatz kommt, toxisch und ökologisch unbedenklich sein. Ferner muß er einen entsprechend hohen Flammpunkt besitzen, um nicht aufwendige Schutzmaßnahmen für den Brandfall zu erfordern. Darüber hinaus sollte die kinematische Viskosität innerhalb des Temperaturbereiches, in dem der Kälteträger zur Anwendung kommt, möglichst gering sein, um einen Energiemehraufwand beim Umpumpen des Kälteträgers und einen nachteiligen Einfluß beim Wärmeübergang zu vermeiden.

Abhängig von den in den Kühlmöbeln vorgesehenen Temperaturbereichen, erfolgt die Kälteübertragung mittels eines Normalkühl-Kreislaufes z. B. bis -15°C und eines Tiefkühl-Kreislaufes z. B. bis -40°C. Für den Normalkühl-Kreislauf kommt entweder eine Ethanol-Wassermischung oder eine Propylenglykol-Wassermischung zum Einsatz.

Ethanol-Wasser als Kälteträger birgt jedoch in der benötigten Mischung mit einem Flammpunkt von 29°C noch ein erhebliches Gefahrenpotential im Brandfalle. Die Akzeptanz dieses Kälteträgers ist deshalb uneinheitlich. Ethanol weist ferner eine Giftigkeit (MAK-Wert 1000) auf. Mischungen von Ethanol und Wasser weisen in der benötigten Konzentration von 30 %-Massenanteil in der Viskosität ein Maximum auf. Für die angewandte Konzentration des Kälteträgers beträgt die kinematische Viskosität bei -10°C 18,3 mm²/s. Diese hohe Viskosität hat somit einen merklichen Energieaufwand beim Umpumpen des Kälteträgers und einen nachteiligen Einfluß beim Wärmeübergang in den Kühlmöbeln zur Folge.

Noch etwas größere energetische Nachteile besitzt das Propylenglykol-Wassergemisch als Kälteträger, da für das Erzielen genügend niedriger Eispunkte relativ hohe Glykolkonzentrationen im Wasser benötigt werden. Für den Tiefkühl-Kreislauf bietet sich z. B. der in der DE-OS 38 25 096 beschriebene Kälteträger, bestehend aus einem Gemisch aus Polyorganosiloxanen an. Dieses Gemisch weist bei einer Temperatur von -40°C eine kinematische Viskosität von weniger als 6 mm²/s auf und sein Flammpunkt liegt bei einer Temperatur von über 55°C. Nachteile dieses Gemisches sind der geringe Wärmeleitkoeffizient und die niedrige spezifische Wärme. Letzterer Nachteil muß deshalb durch eine erhöhte Umlaufmenge des Kälteträgers ausgeglichen werden, was zwangsläufig in der Rohrleitungsdimensionierung, d.h. vergrößerte Rohrquerschnitte, berücksichtigt werden muß.

Aus der WO-A-9 309 198 ist eine Absorptionskälteanlage bekannt, bei der als Absorbensstoff eine wässrige Kaliumformiatlösung verwendet wird. Die US-A-5 104 562 offenbart ein Verfahren zum Betreiben einer Kälteanlage, bei dem zum Erreichen eines niedrigen Gefrierpunktes eine Mischung aus Kaliumformiat und Kaliumacetat als Kälteträger zum Einsatz kommt.

Ziel und Aufgabe der vorliegenden Erfindung ist es, einen Kälteträger anzugeben, der zum einen innerhalb des Temperaturbereiches, in dem er verwendet wird, eine hohe spezifische Wärmekapazität und -leitfähigkeit besitzt und eine möglichst geringe kinematische Viskosität aufweist. Er muß zum anderen toxisch und ökologisch unbedenklich sein und eine gute Verträglichkeit mit den gebräuchlichen Konstruktionswerkstoffen aufweisen.

Dies wird erfindungsgemäß dadurch erreicht, daß als Kälteträger eine wässrige Kaliumformiatlösung verwendet wird, wobei bei einer Kälteträgertemperatur von -15 bis -30°C die Salzkonzentration zwischen 30 und 40 %-Massenanteil und bei einer Kälteträgertemperatur von -30 bis -55°C die Salzkonzentration zwischen 40 und ca. 55 %-Massenanteil beträgt.

Weitere Ausgestaltungen des erfindungsgemäßen Verfahrens sind Gegenstände der Unteransprüche.

Aufgrund der oftmals großen Rohrleitungsnetzen von Supermärkten ist bei der Wahl der Kälteträger deren Viskosität zu beachten. Eine höhere Viskosität führt dazu, daß der Energieaufwand beim Umpumpen des Kälteträgers ansteigt. Kaliumformiat besitzt gegenüber allen anderen als Kälteträgern verwendeten Salzen, z. B. NaCl, CaCl₂, CaCl₂/MgCl₂ oder K₂CO₃, eine wesentlich geringere kinematische Viskosität.

Dies sei anhand der folgenden Vergleichstabelle (Tabelle 1) gezeigt, in der für einige Kälteträger und den erfindungsgemäßen Kälteträger die Viskositäten v für Kälteträgertemperaturen von -10°C und -30°C angegeben sind, wobei deren Eispunkte um 10K niedriger liegen:

**Tabelle 1:**

| Kälteträger | ν_{-10°C} [mm²/s] | ν_{-30°C} [mm²/s] |
|---|---|---|
| Calciumchlorid | 4,4 | 15,0 |
| Kaliumkarbonat | 5,5 | 29,8 |
| Propylenglykol | 18,0 | 250,0 |
| Ethylenglykol | 6,5 | 48,5 |
| Ethanol/Wasser | 13,2 | 34,5 |
| Kaliumformiat | 2,7 | 8,3 |

Kaliumformiat weist im Vergleich zu anderen Kälteträgern in toxikologischer und ökologischer Hinsicht keine Nachteile auf. Es fällt nicht unter die Gefahrstoffverordnung und ist nicht kennzeichnungspflichtig. Es ist ferner nach dem Sicherheitsdatenblatt biologisch abbaubar; weiterhin unterliegt es nicht der Verordnung der brennbaren Flüssigkeiten (VbF).

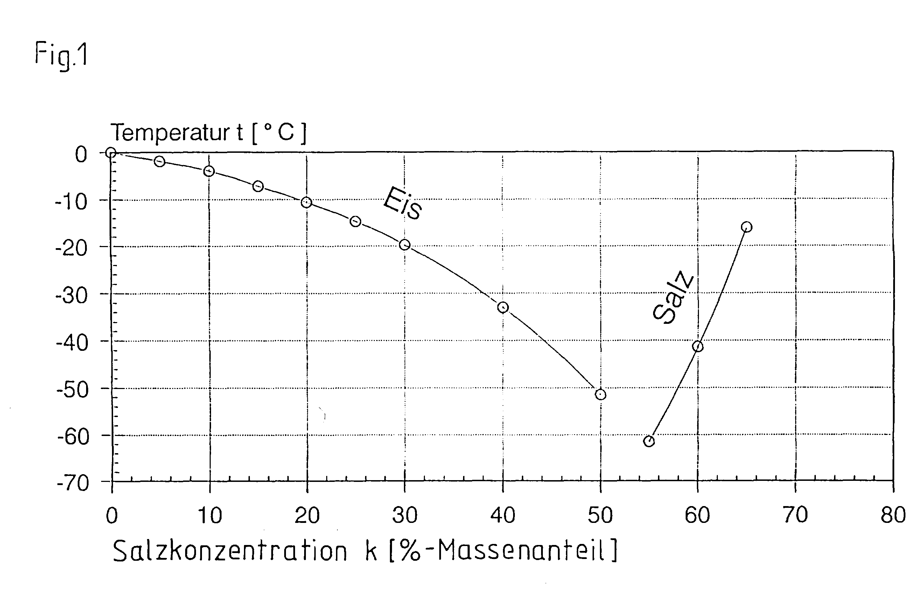

Figur 1 zeigt die Eis- und Salzkurve des erfindungsgemäßen Kälteträgers. Unterhalb der Eis- bzw. Salzkurve kommt es zu einem Ausfallen von Eis bzw. Salz, also von Kaliumformiat. Am Schnittpunkt der Eis- und Salzkurve - dem eutektischen Punkt - kommt es zum Ausfallen von Eis und Salz.

Bei der Verwendung des erfindungsgemäßen Kälteträgers in gewerblichen Kälteanlagen im Normalkühlbereich wird vorgeschlagen, daß bei einer Kälteträgertemperatur von -15 bis -30°C die Salzkonzentration zwischen 30 und 40 %-Massenanteil beträgt. Bei einer Verwendung des erfindungsgemäßen Kälteträgers im Tiefkühlbereich hingegen, also bei einer Kälteträgertemperatur von -30 bis ca. -55°C, sollte die Salzkonzentration zwischen 40 und ca. 55 %-Massenanteil betragen.

Im Vergleich mit anderen Kälteträgern auf der Basis von Salzen, z. B. CaCl₂ oder NaCl, besitzen wässrige Lösungen des erfindungsgemäßen Kälteträgers schwach alkalische und damit korrosionshemmende Eigenschaften. Ein Zusatz von pH-Korrekturmitteln und/oder Puffersubstanzen bei der Verwendung von Stahl als Rohrleitungsmaterial ist somit nicht erforderlich.

Bekannte Korrosions-Inhibitoren wie z. B. Benztriazol, Tolyltriazol und Mercaptobenztriazol, sind im erfindungsgemäßen Kälteträger nicht bzw. nur sehr schwer löslich. Die Erfindung weiterbildend wird deshalb vorgeschlagen, dem erfindungsgemäßen Kälteträger als Korrosions-Inhibitor 1,2,4-Triazol in einer Konzentration zwischen 10 und 2000 ppm, vorzugsweise 500 und 1500 ppm, zuzusetzen. 1,2,4-Triazol ist im erfindungsgemäßen Kälteträger vollständig löslich. Ferner kann alternativ oder zusätzlich Borax in einer Konzentration zwischen 500 und 2500 ppm, vorzugsweise zwischen 1000 und 1500 ppm, als Korrosions-Inhibitor zugesetzt werden.

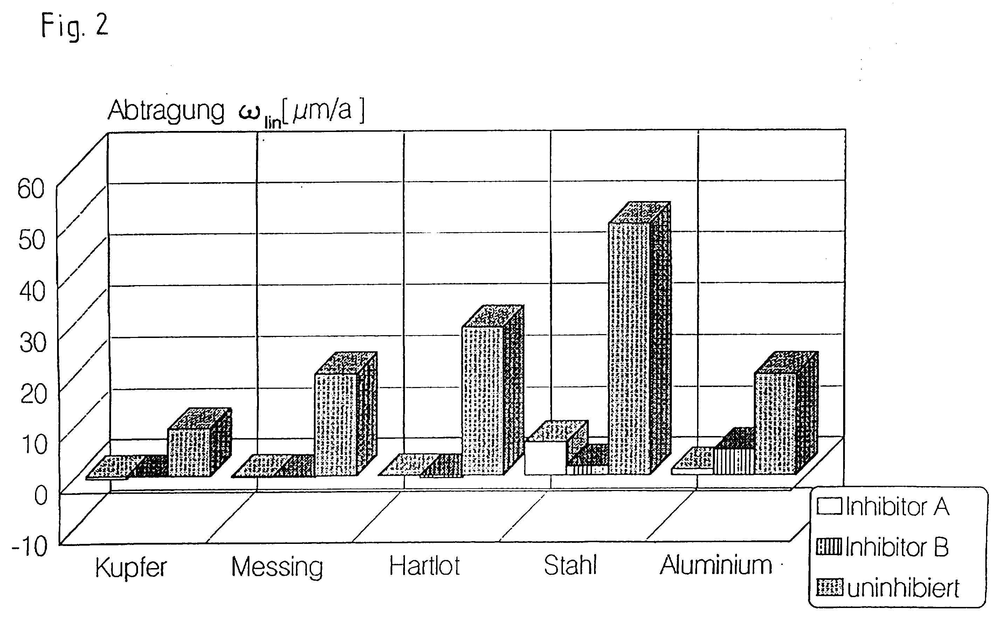

Die Tabelle 2 gibt die Versuchsergebnisse einer Korrosionsprüfung in Anlehnung an ASTM D 1384-87 wieder, wobei die Werte mit dem Inhibitor 1,2,4-Triazol bei einer Konzentration von 100 ppm und die Werte des Inhibitors 2 bei einer Konzentration von 100 ppm 1,2,4-Triazol und 2500 ppm Borax erzielt wurden. Figur 2 zeigt die graphische Auswertung der Tabelle 2 (Ein "-" bedeutet hierbei eine Massenzunahme).

**Tabelle 2:**

| Werkstoff | Abtragung µm/a] | | |
|---|---|---|---|
| | 1,2,4-Triazol Inhibitor 1 | 1,2,4-Triazol/Borax; Inhibitor 2 | Ohne Inhibitor |
| SF-Cu F25 Kupfer | -0,46 | 0,00 | 9,3 |
| CuZn37 F38 Messing | -0,25 | -0,26 | 20 |
| L-CuP6 Hartlot | 0,00 | -0,44 | 29 |
| St 12.03 Stahl | 6,5 | 1,8 | 49 |
| Al99 F14 Aluminium | 1,2 | 5,0 | 19,8 |

Gängige, nichtmetallische Werkstoffe, wie z. B. Elastomere aus Nitrilkautschuk und Chlorbutadien-Kautschuk, sowie Plastomere aus Polyvinylchlorid, Polyamide und Polyethylene sind gegenüber dem erfindungsgemäßen Kälteträger beständig. Gleiches gilt auch für die seit einiger Zeit verwendeten, asbestfreien Dichtungen mit Aramid-Fasern.

Kaliumformiat ist ein technisch gehandelter Stoff, z. B. in der Lederindustrie, und steht damit in ausreichender Menge kostengünstig zur Verfügung.

Um kleinste Undichtigkeiten in Rohrleitungen, Armaturen oder Apparaten zu erkennen, wird ferner vorgeschlagen, daß dem erfindungsgemäßen Kälteträger ein Farbstoff, wie z. B. Xylenolorange, in einer Konzentration von 10 bis 50 ppm, vorzugsweise von 20 bis 40 ppm, zugesetzt wird.

Eine weitere Ausgestaltung der Erfindung ist dadurch gekennzeichnet, daß in Abwesenheit des Inhibitors Borax dem Kälteträger ein pH-Indikator, vorzugsweise Phenolphthalein, in einer Konzentration von < 100 ppm zugesetzt wird. Mittels des dem Kälteträger zugesetzten pH-Indikators ist ein Ammoniak-Einbruch in den Kälteträger leicht detektierbar. Der zunächst farblose Kälteträger wird sich bei Zugabe von Phenolphthalein als pH-Indikator im Falle eines Ammoniak-Eindringens rotviolett verfärben.

## Patentansprüche

1. Verfahren zum Betreiben einer Kälteanlage, dadurch gekennzeichnet, daß als Kälteträger eine wässrige Kaliumformiatlösung verwendet wird, wobei bei einer Kälteträgertemperatur von -15 bis -30°C die Salzkonzentration zwischen 30 und 40 %-Massenanteil und bei einer Kälteträgertemperatur von -30 bis -55°C die Salzkonzentration zwischen 40 und ca. 55 %-Massenanteil beträgt.

2. Verfahren zum Betreiben einer Kälteanlage nach Anspruch 1, dadurch gekennzeichnet, daß als Inhibitor 1,2,4-Triazol in einer Konzentration zwischen 10 und 2000 ppm, vorzugsweise zwischen 500 und 1500 ppm, zugesetzt wird.

3. Verfahren zum Betreiben einer Kälteanlage nach Anspruch 1 oder 2, dadurch gekennzeichnet, daß als Inhibitor Borax in einer Konzentration zwischen 500 und 2500 ppm zugesetzt wird.

4. Verfahren zum Betreiben einer Kälteanlage nach einem der vorhergehenden Ansprüche, dadurch gekennzeichnet, daß dem Kälteträger ein Farbstoff, wie z. B. Xylenolorange zugesetzt wird.

5. Verfahren zum Betreiben einer Kälteanlage nach Anspruch 4, dadurch gekennzeichnet, daß der Farbstoff in einer Konzentration von 10 bis 50 ppm, vorzugsweise von 20 bis 40 ppm, zugesetzt wird.

6. Verfahren zum Betreiben einer Kälteanlage nach einem der vorhergehenden Ansprüche, dadurch gekennzeichnet, daß in Abwesenheit des Inhibitors Borax dem Kälteträger ein pH-Indikator, vorzugsweise Phenolphthalein, in einer Konzentration von < 100 ppm zugesetzt wird.

## Claims

1. Method of operating a refrigeration plant, characterized in that an aqueous potassium formate solution is used as refrigerant, in which at a refrigerant temperature of from -15 to -30°C the salt concentration is between 30 and 40% by mass and at a refrigerant temperature of from -30 to -55°C the salt concentration is between 40 and approximately 55% by mass.

2. Method of operating a refrigeration plant according to Claim 1, characterized in that 1,2,4-triazole is added as inhibitor at a concentration between 10 and 2000 ppm, preferably between 500 and 1500 ppm.

3. Method of operating a refrigeration plant according to Claim 1 or 2, characterized in that Borax is added as inhibitor at a concentration between 500 and 2500 ppm.

4. Method of operating a refrigeration plant according to one of the preceding claims, characterized in that a dye, for example xylenol orange, is added to the refrigerant.

5. Method of operating a refrigeration plant according to Claim 4, characterized in that the dye is added at a concentration of from 10 to 50 ppm, preferably from 20 to 40 ppm.

6. Method of operating a refrigeration plant according to one of the preceding claims, characterized in that, in the absence of the inhibitor Borax, a pH indicator, preferably phenolphthalein, is added to the refrigerant at a concentration of < 100 ppm.

## Revendications

1. Procédé pour l'exploitation d'une installation frigorifique, caractérisé en ce qu'on utilise comme agent réfrigérant une solution aqueuse de formiate de potassium, la concentration de sel s'élevant à entre 30 et 40% de proportion en masse à une température de l'agent réfrigérant de -15 à -30°C et la concentration de sel s'élevant à entre 40 et environ 55% de proportion en masse à une température de l'agent réfrigérant de -30 à -55°C.

2. Procédé pour l'exploitation d'une installation frigorifique suivant la revendication 1, caractérisé en ce que l'on ajoute comme inhibiteur du 1,2,4-triazole à une concentration entre 10 et 2000 ppm, de préférence entre 500 et 1500 ppm.

3. Procédé pour l'exploitation d'une installation frigorifique suivant la revendication 1 ou 2, caractérisé en ce que l'on ajoute comme inhibiteur du borax à une concentration entre 500 et 2500 ppm.

4. Procédé pour l'exploitation d'une installation frigorifique suivant l'une quelconque des revendications précédentes, caractérisé en ce que l'on ajoute à l'agent réfrigérant un colorant, comme par exemple du xylénol orange.

5. Procédé pour l'exploitation d'une installation frigorifique suivant la revendication 4, caractérisé en ce que l'on ajoute le colorant à une concentration de 10 à 50 ppm, de préférence de 20 à 40 ppm.

6. Procédé pour l'exploitation d'une installation frigorifique suivant l'une quelconque des revendications précédentes, caractérisé en ce qu'en l'absence de l'inhibiteur borax, on ajoute à l'agent réfrigérant un indicateur de pH, de préférence de la phénolphtaléine à une concentration inférieure à 100 ppm.
